(19) Europäisches Patentamt
European Patent Office
Office européen des brevets

(11) **EP 1 459 949 A1**

(12) **EUROPÄISCHE PATENTANMELDUNG**

(43) Veröffentlichungstag:
**22.09.2004 Patentblatt 2004/39**

(51) Int Cl.⁷: **B60T 8/00**

(21) Anmeldenummer: **04000111.7**

(22) Anmeldetag: **07.01.2004**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **18.03.2003 DE 10311838**

(71) Anmelder: **WABCO GmbH & CO. OHG**
**30453 Hannover (DE)**

(72) Erfinder:
• **Heuer, Bernd**
**31171 Nordstemmen (DE)**
• **Plähn, Klaus, Dr.**
**30926 Seelze (DE)**

(74) Vertreter: **Günther, Constantin**
**WABCO GmbH & Co. OHG,**
**Postfach 91 12 62**
**30432 Hannover (DE)**

(54) **Verfahren zur Vermeidung des Umkippens eines Fahrzeugzuges**

(57) Die Erfindung betrifft ein Verfahren zur Vermeidung des Umkippens eines Fahrzeugzuges, bestehend aus Zugfahrzeug (1) und Anhängefahrzeug (2), wobei in dem Zugfahrzeug (1) ein Steuerungssystem (5, 6, 9, 11, 12, 17, 18, 19, 21, 22, 23, 28) vorgesehen ist, welches bei einer erkannten Gefahr des Umkippens des Fahrzeugzuges (1, 2) automatisch eine Betätigung der Bremsanlage des Zugfahrzeuges (1) und/oder des Anhängefahrzeuges (2) bewirkt. Hiervon ausgehend ist ein zuverlässiges Verfahren zur Vermeidung des Umkippens eines Fahrzeugzuges anzugeben, bei dem die Erkennung der Gefahr des Umkippens auf einfache und möglichst wenig aufwendige Weise erfolgen kann. Dies wird dadurch erreicht, daß von dem Anhängefahrzeug (2) zumindest ein Datensignal (M, D), welches einen Rückschluß auf die Drehgeschwindigkeit (VD) wenigstens eines kurveninneren Rades (33) des Anhängefahrzeuges (2) erlaubt, an das Steuerungssystem (5, 6, 9, 11, 12, 17, 18, 19, 21, 22, 23, 28) übermittelbar ist und das Steuerungssystem (5, 6, 9, 11, 12, 17, 18, 19, 21, 22, 23, 28) das Datensignal (M, D) zur Erkennung der Gefahr des Umkippens des Fahrzeugzuges (1, 2) heranzieht.

FIG. 1

EP 1 459 949 A1

**Beschreibung**

Die Erfindung betrifft ein Verfahren zur Vermeidung des Umkippens eines Fahrzeugzuges gemäß dem Oberbegriff des Patentanspruchs 1.

Ein gattungsgemäßes Verfahren ist aus der DE 196 02 879 C1 bekannt.

Das bekannte Verfahren bezieht sich auf die Erkennung der Gefahr des Umkippens eines Fahrzeugzuges um seine Längsachse, insbesondere eines aus Zugmaschine und Auflieger bestehenden Sattelzuges. Die Gefahr des Umkippens wird dort durch geringfügige Betätigung der Bremsen des Aufliegers und durch Beobachten der Reaktion eines in dem Auflieger eingebauten Antiblockiersystems (ABS) festgestellt. Wenn das ABS während des relativ schwachen Bremseingriffs einen Regeleingriff im Sinne einer Blockierverhinderung durchführt, dann wird dies als Indikator für eine bevorstehende Umkippgefahr des Sattelzuges interpretiert. Als Reaktion auf die Umkippgefahr wird entweder ein Warnsignal ausgegeben oder ein stärkerer Bremseingriff durchgeführt, um die Querbeschleunigung des Sattelzuges zu reduzieren.

Bei dem bekannten Verfahren wird vorgeschlagen, das Einsetzen eines ABS-Regeleingriffs anhand einer Messung der Stromaufnahme des ABS in dem Auflieger festzustellen. Hierfür wird bei dem bekannten Verfahren ein Meßgerät zur Strommessung verwendet. Ein derartiges Meßgerät vorzusehen ist teuer und technisch aufwendig.

Der Erfindung liegt daher die Aufgabe zugrunde, ein zuverlässiges Verfahren zur Vermeidung des Umkippens eines Fahrzeugzuges anzugeben, bei dem die Erkennung der Gefahr des Umkippens auf einfache und möglichst wenig aufwendige Weise erfolgen kann.

Diese Aufgabe wird durch die in dem Patentanspruch 1 angegebene Erfindung gelöst. Weiterbildungen und vorteilhafte Ausgestaltungen der Erfindung sind in den Unteransprüchen angegeben.

Nachfolgend wird als Sammelbegriff für die verschiedenen Arten, von dem Zugfahrzeug aus die Bremsanlage des Anhängefahrzeuges zu betätigen, der Begriff des Bremsanforderungssignals verwendet. Hierunter werden alle Arten der Informationsübertragung vom Zugfahrzeug zum Anhängefahrzeug verstanden, die zu einer Betätigung der Bremsanlage des Anhängefahrzeuges führen. Als Beispiele seien eine Bremsdruckvorgabe über ein Anhängersteuerventil oder die Übertragung eines Bremsbetätigungswerts über eine elektronische Datenschnittstelle genannt.

Die Erfindung hat den Vorteil, daß von dem Anhängefahrzeug ermittelte Größen in dem Steuerungssystem des Zugfahrzeuges zur Erkennung der Gefahr des Umkippens des Fahrzeugzuges herangezogen werden können. Eine Erweiterung der in dem Fahrzeugzug vorhandenen Systeme um zusätzliche Komponenten ist dabei nicht erforderlich. Des weiteren ist eine Verbesserung bei der Erkennung der Gefahr des Umkippens möglich, da nicht erst auf einen ABS-Regeleingriff gewartet werden muß, sondern schon vor ABS-Regeleingriff geeignete Maßnahmen zur Vermeidung des Umkippens des Fahrzeugzuges eingeleitet werden können, wie nachfolgend noch näher beschrieben.

In einer vorteilhaften Weiterbildung der Erfindung können Daten des Anhängefahrzeuges gemäß der Norm ISO 11992 verwendet werden. Hierdurch ist auf einfache Weise eine Kompatibilität zwischen Zugfahrzeugen und Anhängefahrzeugen unterschiedlicher Herstellung gewährleistet.

Die Erfindung wird nachfolgend unter Nennung weiterer Vorteile anhand eines Ausführungsbeispiels unter Verwendung von Zeichnungen näher erläutert.

Es zeigen

Fig. 1    eine Draufsicht auf einen Fahrzeugzug und

Fig. 2    eine vorteilhafte Ausgestaltung des erfindungsgemäßen Verfahrens in Zeitdiagrammdarstellung.

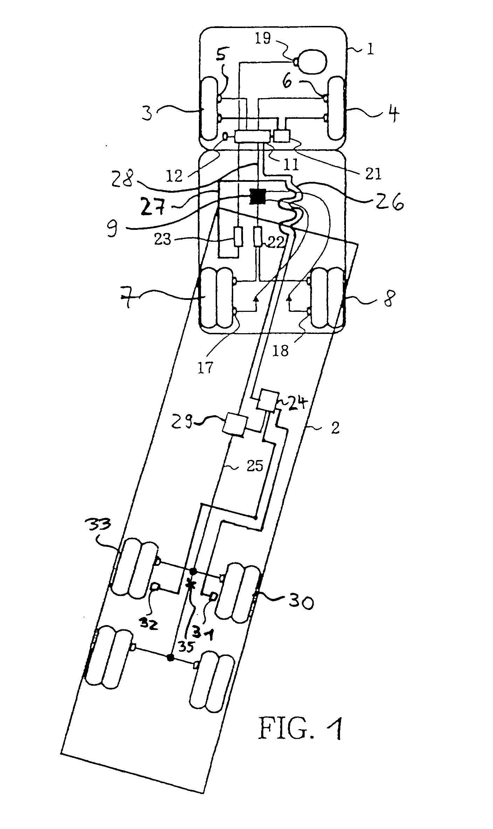

In der Fig. 1 ist ein Fahrzeugzug mit einem Zugfahrzeug (1) dargestellt, an das ein Anhängefahrzeug (2) angekoppelt ist. Das Zugfahrzeug weist eine lenkbare Vorderachse, welcher Räder (3, 4) zugeordnet sind, sowie eine Hinterachse, welcher Räder (7, 8) zugeordnet sind, auf. Die Räder (3, 4, 7, 8) sind über den Rädern zugeordnete Radbremsen mit Bremskraft beaufschlagbar. Nachfolgend sei angenommen, das Zugfahrzeug (1) sei mit einer Druckmittelbremsanlage sowie mit einem Steuerungssystem versehen, wie z. B. einem elektrisch gesteuertem Bremssystem (EBS). Die Erfindung ist jedoch auch vorteilhaft bei Bremsanlagen anderen Typs einsetzbar, z. B. bei rein elektromechanisch betätigbaren Bremsen. Des weiteren sei in dem Zugfahrzeug (1) ein Fahrdynamik-Regelungssystem vorgesehen, das ebenfalls als Teil des erwähnten Steuerungssystems ausgebildet sein kann.

Als Teil des Steuerungssystems ist in dem Zugfahrzeug (1) eine Steuereinrichtung (11) vorgesehen, die zur Steuerung verschiedener Bremsfunktionen an der Vorderachse des Zugfahrzeuges (1) dient. Die Steuereinrichtung (11) kann z. B. als elektronisches EBS-Steuergerät ausgebildet sein. Hierfür ist die Steuereinrichtung (11) über eine elektrische Leitung mit einer Ventileinrichtung (21) verbunden, mittels der der Bremsdruck in den Radbremsen der Räder (3, 4) steuerbar ist. Zur Steuerung der Radbremsen der Hinterachse zugeordneten Rädern (7, 8) ist ein Steuermodul (9) vorgesehen. Das Steuermodul (9) ist über eine elektrische Leitung mit einer weiteren Ventileinrichtung (22) verbunden, über die der Bremsdruck in den Radbremsen der Räder (7, 8) steuerbar ist. Das Steuermodul (9) ist über eine Datenleitung (28) mit der Steuereinrichtung (11) zum Datenaustausch verbunden.

Das Steuermodul (9) empfängt über elektrische Leitungen Drehzahlsignale von an den Rädern (7, 8) angeordneten Drehzahlsensoren (17, 18), mittels derer die Drehgeschwindigkeiten der Hinterräder (7, 8) bestimmbar sind. Die Steuereinrichtung (11) ist mit Drehzahlsensoren (5, 6), mittels derer die Drehgeschwindigkeiten der Vorderräder (3, 4) bestimmbar sind, über elektrische Leitungen verbunden. Die Steuereinrichtung (11) empfängt über die Datenleitung (28) von der weiteren Steuereinrichtung (9) Signale, die die Drehgeschwindigkeiten der Hinterräder (7, 8) des Zugfahrzeuges (1) repräsentieren.

Des weiteren kann an die Steuereinrichtung (11) über elektrische Leitungen z. B. ein Lenkwinkelsensor (19) sowie ein Querbeschleunigungssensor (12) angeschlossen sein. Der Querbeschleunigungssensor (12) ermöglicht eine Feststellung der Querbeschleunigung des Zugfahrzeuges (1) durch Messung. Alternativ kann, wenn kein Querbeschleunigungssensor vorgesehen werden soll, die Querbeschleunigung auch gemäß dem aus der DE 100 17 045 A1 bekannten Verfahren aus den Drehgeschwindigkeiten der Räder (5, 6, 7, 8) bestimmt werden.

Das Anhängefahrzeug (2) weist ebenfalls eine druckmittelbetätigbare Bremsanlage auf, die über eine Bremsleitung (25) betätigbar ist. Als Einrichtung (23) zur Steuerung der Einbremsung des Anhängefahrzeuges (2) ist ein in dem Zugfahrzeug (1) angeordnetes Anhängersteuerventil (23) vorgesehen, mittels dessen die Bremsdruckleitung (25) über eine Bremsdruckleitung (27) mit Bremsdruck beaufschlagbar ist. Das Anhängersteuerventil (23) ist über eine elektrische Leitung an die Steuereinrichtung (11) angeschlossen. Mittels des Anhängersteuerventils (23) kann die Steuereinrichtung (11) den Bremsdruck in dem Anhängefahrzeug (2) steuern, z. B. indem ein in der Steuereinrichtung (11) ermitteltes Bremsanforderungssignal durch geeignete Betätigung des Anhängersteuerventils (23) in einen entsprechenden Druckwert umgewandelt wird.

Die Komponenten (5, 6, 9, 11, 12, 17, 18, 19, 21, 22, 23, 28) sind im Ausführungsbeispiel gemäß Fig. 1 Teile des Steuerungssystems des Zugfahrzeuges (1).

Des weiteren ist in dem Anhängefahrzeug (2) eine Einrichtung (24) vorgesehen, welche eine Blockierschutzfunktion für das Anhängefahrzeug (2) ausübt, z. B. ein Antiblockiersystem. Das Antiblockiersystem (24) ist mittels einer Ventileinrichtung (29) in der Lage, den über die Bremsdruckleitung (25) dem Anhängefahrzeug zugeführten Bremsdruck zu modulieren, d.h. im Falle von Blockiergefahr zu reduzieren. Hierfür ist das Antiblokkiersystem (24) über elektrische Leitungen mit an den Rädern (30, 33) angeordneten Drehzahlsensoren (31, 32) verbunden, mittels derer die Drehgeschwindigkeiten der Räder (30, 33) bestimmbar sind. Aus dem Verhalten der Drehgeschwindigkeiten kann das Antiblockiersystem (24) dann eine mögliche Blockiergefahr ableiten.

Das Antiblockiersystem (24) ist über ein elektrisches Verbindungskabel (26) mit der Steuereinrichtung (11) in dem Zugfahrzeug (1) verbunden. Das elektrische Verbindungskabel (26) enthält elektrische Versorgungsleitungen sowie eine Datenschnittstelle. Über die Datenschnittstelle gibt das Antiblockiersystem (24) eine Reihe von Datensignalen an die Steuereinrichtung (11) aus, z. B. den Mittelwert (M) der Drehgeschwindigkeiten der Räder (30, 33), deren Differenzwert (D) sowie eine Information über die Durchführung einer Antiblokkier-Regelung. Diese und weitere übertragene Datensignale sind beispielsweise in der Norm ISO 11992 näher erläutert.

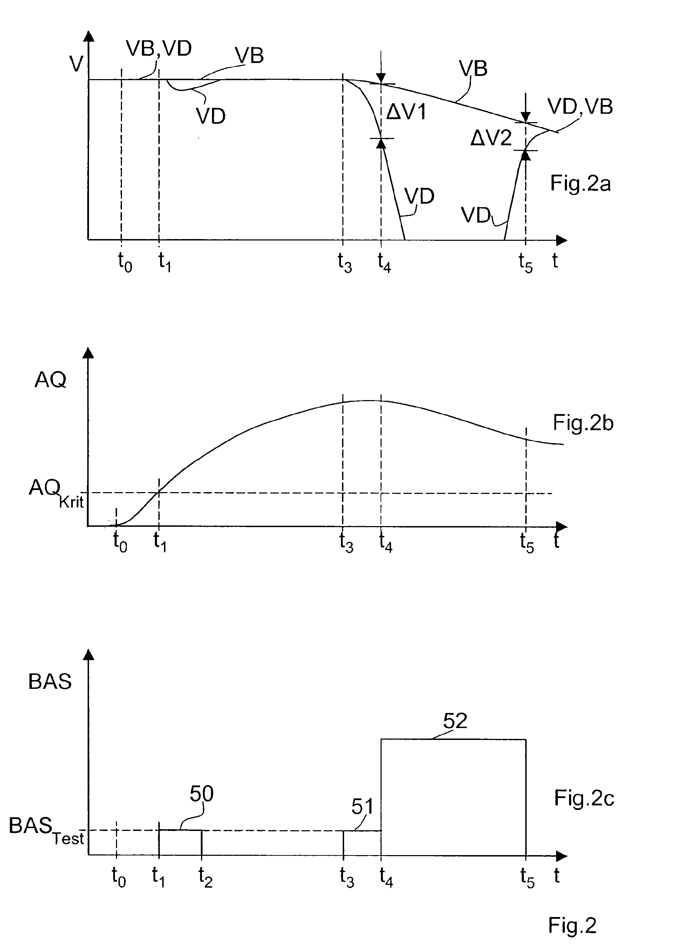

Die Steuereinrichtung (11) führt eine Reihe von Steueralgorithmen aus, beispielsweise Blockierschutzfunktion für die Vorderachse des Zugfahrzeuges (1), elektronische Bremskraftverteilung zwischen Vorder- und Hinterachse des Zugfahrzeuges (1), Bremsbelag-Verschleißoptimierung zwischen Vorder- und Hinterachse des Zugfahrzeuges (1) sowie ein Verfahren zur Vermeidung des Umkippens des Fahrzeugzuges (1, 2). Anhand der Fig. 2 soll dieses Verfahren zur Vermeidung des Umkippens Fahrzeugzuges (1, 2) näher erläutert werden.

In der Fig. 2 ist anhand dreier Zeitdiagramme der zeitliche Verlauf von Geschwindigkeitssignalen (VB, VD) (Fig. 2a), der Querbeschleunigung (AQ) (Fig. 2b) und des Bremsanforderungssignals (BAS) (Fig. 2c). In der Fig. 2a ist der zeitliche Verlauf einer von der Steuereinrichtung (11) berechneten Bewegungsgeschwindigkeit (VB) des Anhängefahrzeuges (2) sowie eine aus den von dem Anhängefahrzeug (2) empfangenen Datensignalen bestimmte resultierende Raddrehgeschwindigkeit (VD) angegeben.

In dem Anhängefahrzeug (2) werden die Raddrehgeschwindigkeiten von Rädern (30, 33) der linken und der rechten Fahrzeugseite mittels Drehgeschwindigkeitssensoren (31, 32) in dem Antiblockiersystem (24) erfaßt. Das Antiblockiersystem (24) bestimmt aus dem Signal des Sensors (32) ein Geschwindigkeitssignal ($v_2$), aus dem Signal des Sensors (31) ein Geschwindigkeitssignal ($v_1$). Des weiteren bestimmt das Antiblockiersystem (24) aus den Geschwindigkeitssignalen ($v_1$, $v_2$) ein mittleres Geschwindigkeitssignal (M) sowie ein Differenzgeschwindigkeitssignal (D), z. B. in folgender Weise:

$$M = \frac{v_1 + v_2}{2} \qquad [1]$$

$$D = v_1 - v_2 \qquad [2]$$

Die so ermittelten Größen (M, D) überträgt das Antiblockiersystem (24) über die Datenschnittstelle an das Zugfahrzeug (1).

In dem Zugfahrzeug (1) wird die empfangene mittlere Geschwindigkeit (M) und die Differenzgeschwindigkeit (D) empfangen und weiteren Berechnungsschritten zugeführt. In einem ersten Berechnungsschritt werden die Raddrehgeschwindigkeiten der einzelnen Räder (30, 33) des Anhängefahrzeuges (2) aus diesen Größen (M, D) rekonstruiert, z. B. in folgender Weise:

$$VD_1 = M + \frac{D}{2} \qquad [3]$$

$$VD_2 = M - \frac{D}{2} \qquad [4]$$

Die Bewegungsgeschwindigkeiten ($VB_1$, $VB_2$) der linken und der rechten Fahrzeugseite des Anhängefahrzeuges (2) werden von der Steuereinrichtung (11) vorzugsweise unter Verwendung der Signale des Lenkwinkelsensors (19), des Querbeschleunigungssensors (12) sowie der Raddrehgeschwindigkeitssignale der Sensoren (5, 6, 17, 18) des Zugfahrzeuges derart geschätzt, daß sie ein Maß für die Geschwindigkeit der mit Drehgeschwindigkeitssensoren (31, 32) versehenen Räder (30, 33) gegenüber der Fahrbahn darstellen. Hierdurch stellen die Bewegungsgeschwindigkeiten ($VB_1$, $VB_2$) und die zuvor ermittelten Raddrehgeschwindigkeiten ($VD_1$, $VD_2$) vergleichbare physikalische Größen dar, die z. B. für eine Differenzbildung zwecks Bestimmung eines Maßes des Bremsschlupfs des Anhängefahrzeuges (2) sinnvoll verwendbar sind.

Die Bewegungsgeschwindigkeiten ($VB_1$, $VB_2$) und die Raddrehgeschwindigkeiten ($VD_1$, $VD_2$) werden sodann zur seitenweisen Überwachung des Bremsschlupfs des Anhängefahrzeuges (2) verwendet. Der nachfolgend anhand der Fig. 2a dargestellte Vorgang wird für die linke und für die rechte Fahrzeugseite des Anhängefahrzeuges (2) jeweils separat durchgeführt. In der Fig. 2a wird zur Vereinfachung nur der Verlauf der Geschwindigkeitssignale für die kurveninnere Fahrzeugseite anhand von Platzhaltern (VB, VD) dargestellt. Die Abweichung des Graphen der Raddrehgeschwindigkeit (VD) von dem Graphen der Bewegungsgeschwindigkeit (VB) in der Fig. 2a stellt daher das erwähnte Maß des Bremsschlupfs der kurveninneren Fahrzeugseite des Anhängefahrzeuges (2) dar. Auf der kurvenäußeren Seite verlaufen die Raddrehgeschwindigkeit und die Bewegungsgeschwindigkeit im wesentlichen identisch, d.h. es tritt dort kein nennenswerter Bremsschlupf auf.

In dem Beispiel gemäß Fig. 1 befindet sich das Rad (33) auf der kurveninneren Fahrzeugseite des Anhängefahrzeuges (2), das Rad (30) auf der kurvenäußeren Seite.

Gemäß Fig. 2 fährt der Fahrzeugzug beginnend vom Zeitpunkt t = 0 zunächst in Geradeausfahrt und beginnt zum Zeitpunkt ($t_0$) mit einer Kurvenfahrt. Zu diesem Zeitpunkt beginnt das Querbeschleunigungssignal (AQ) Werte ungleich Null anzunehmen. Zu einem Zeitpunkt ($t_1$) erreicht das Querbeschleunigungssignal

(AQ) einen vorbestimmten Wert ($AQ_{Krit}$) und überschreitet diesen nachfolgend. Die Steuereinrichtung (11) erkennt dies zum Zeitpunkt ($t_1$) und sendet ein Test-Bremsanforderungssignal (50) an das Anhängefahrzeug (2) aus, derart, daß ein Bremsanforderungssignal (BAS) in Höhe eines Wertes ($BAS_{Test}$) ausgegeben wird. Das Test-Bremsanforderungssignal (50) ist derart ausgelegt, daß in dem Anhängefahrzeug (2) eine Testbremsung ausgelöst wird, bei der die Bremsanlage des Anhängefahrzeuges derart betätigt wird, daß wenigstens ein kurveninneres Rad (33) des Anhängefahrzeuges mit einer im Verhältnis zur höchstmöglichen Bremskraft geringen Bremskraft beaufschlagt wird. Dies kann z. B. erreicht werden, indem sämtliche Räder des Anhängefahrzeuges mit einer gleichen, relativ geringen Bremskraft beaufschlagt werden. Bei den Rädern der kurvenäußeren Seite des Anhängefahrzeuges (2) führt dies aufgrund einer vergleichsweise hohen Normalkraft zwischen Rad und Fahrbahn zu keiner spürbaren Veränderung des Rad-Drehzahlverhaltens. Vorzugsweise ist die im Rahmen der Testbremsung aufgewandte Bremskraft derart festgelegt, z. B. durch Versuche, daß diese zu keiner spürbaren Abbremsung des Fahrzeugzuges (1, 2) führt.

Aus Fig. 2a ist ersichtlich, daß nach Auslösung der Testbremsung der Verlauf der Raddrehgeschwindigkeit (VD) sich vom Verlauf der Bewegungsgeschwindigkeit (VB) löst und somit ein gewisser Bremsschlupf auftritt. Dieser Bremsschlupf ist in der Fig. 2a zur instruktiven Darstellung stark vergrößert dargestellt.

Zum Zeitpunkt ($t_2$) wird die Testbremsung durch Beenden des Test-Bremsanforderungssignals (50) wieder beendet, da die Steuereinrichtung (11) nach Beobachtung des auftretenden Bremsschlupfs keine Gefahr des Umkippens des Fahrzeugzuges erkannt hat. Die Verläufe der Raddrehgeschwindigkeit (VD) und der Bewegungsgeschwindigkeit (VB) gleichen sich daraufhin wieder aneinander an.

Zu einem Zeitpunkt ($t_3$) wird erneut eine Testbremsung nach der zuvor beschriebenen Art mittels eines Test-Bremsanforderungssignals (51) ausgelöst, da das Querbeschleunigungssignal (AQ) immer noch den vorbestimmten Wert ($AQ_{Krit}$) überschritten hat und im Vergleich zum Zeitpunkt ($t_1$) noch weiter angestiegen ist. Dies deutet auf eine weiterhin stattfindende Kurvenfahrt hin, bei der infolge einer ansteigenden Querbeschleunigung die Gefahr des Umkippens möglicherweise größer geworden ist. Die zum Zeitpunkt ($t_3$) ausgelöste Testbremsung bewirkt wiederum, daß sich der Verlauf der Raddrehgeschwindigkeit (VD) von dem Verlauf der Bewegungsgeschwindigkeit (VB) löst, mithin also Bremsschlupf entsteht. Zu dem Zeitpunkt ($t_4$) erreicht der Bremsschlupf einen vorgegebenen Schwellenwert ($\Delta V1$). Die Steuereinrichtung (11) erkennt dies als Gefahr des Umkippens des Fahrzeugzuges (1, 2) und sendet daraufhin ein erhöhtes Bremsanforderungssignal (52) an das Anhängefahrzeug (2) aus. Das Bremsanforderungssignal (52) bewirkt eine Betätigung der Bremsanlage in dem Anhängefahrzeug (2), durch die das Anhängefahrzeug (2) und damit der gesamte Fahrzeugzug (1, 2) abgebremst werden. Unterstützend kann die Steuereinrichtung (11) auch eine Betätigung der Bremsanlage in dem Zugfahrzeug (1) bewirken. In einer vorteilhaften Ausgestaltung der Erfindung erfolgt immer eine Betätigung sowohl der Bremsanlage in dem Zugfahrzeug (1) als auch der Bremsanlage in dem Anhängefahrzeug (2).

Durch die Abbremsung des Fahrzeugzuges (1, 2) verringert sich, wie aus Fig. 2a ersichtlich, die Bewegungsgeschwindigkeit (VB). Mit sich verringernder Bewegungsgeschwindigkeit (VB), d. h. sich insgesamt verringernder Fahrgeschwindigkeit des Fahrzeugzuges (1, 2), verringert sich auch die Querbeschleunigung des Fahrzeugzuges, wie aus Fig. 2b anhand des sich verringernden Querbeschleunigungssignals (AQ) erkennbar. Infolge der verringerten Querbeschleunigung verringert sich auch die Gefahr des Umkippens des Fahrzeugzuges, d. h. durch die Abbremsung kann ein eventuelles Umkippen des Fahrzeugzuges vermieden werden.

Zu einem Zeitpunkt ($t_5$) unterschreitet der Bremsschlupf einen vorbestimmten weiteren Schwellenwert ($\Delta V1$), was von der Steuereinrichtung (11) erkannt und als Indikator dafür gewertet wird, daß keine Gefahr des Umkippens des Fahrzeugzuges mehr besteht. Die Steuereinrichtung (11) beendet daraufhin die Bremsung durch Abschalten des Bremsanforderungssignals (52).

**Patentansprüche**

1. Verfahren zur Vermeidung des Umkippens eines Fahrzeugzuges, bestehend aus Zugfahrzeug (1) und Anhängefahrzeug (2), wobei in dem Zugfahrzeug (1) ein Steuerungssystem (5, 6, 9, 11, 12, 17, 18, 19, 21, 22, 23, 28) vorgesehen ist, welches bei einer erkannten Gefahr des Umkippens des Fahrzeugzuges (1, 2) automatisch eine Betätigung der Bremsanlage des Zugfahrzeuges (1) und/oder des Anhängefahrzeuges (2) bewirkt, **dadurch gekennzeichnet, daß** von dem Anhängefahrzeug (2) zumindest ein Datensignal (M, D), welches einen Rückschluß auf die Drehgeschwindigkeit (VD) wenigstens eines kurveninneren Rades (33) des Anhängefahrzeuges (2) erlaubt, an das Steuerungssystem (5, 6, 9, 11, 12, 17, 18, 19, 21, 22, 23, 28) übermittelbar ist und das Steuerungssystem (5, 6, 9, 11, 12, 17, 18, 19, 21, 22, 23, 28) das Datensignal (M, D) zur Erkennung der Gefahr des Umkippens des Fahrzeugzuges (1, 2) heranzieht.

2. Verfahren nach Anspruch 1, **dadurch gekennzeichnet, daß** das Steuerungssystem (5, 6, 9, 11, 12, 17, 18, 19, 21, 22, 23, 28) unter Zuhilfenahme weiterer Informationen, insbesondere wenigstens einer Drehgeschwindigkeit eines Rades des Zugfahrzeuges (1), den an dem wenigstens einen kurveninneren Rad (33) des Anhängefahrzeuges (2) bei Betätigung von dessen Bremsanlage auftretenden Bremsschlupf zumindest näherungsweise ermittelt.

3. Verfahren nach Anspruch 2, **dadurch gekennzeichnet, daß** die Gefahr des Umkippens erkannt wird, wenn der ermittelte Bremsschlupf vom Betrage her einen vorgegebenen Schwellenwert ($\Delta V1$) überschreitet.

4. Verfahren nach wenigstens einem der vorhergehenden Ansprüche, **dadurch gekennzeichnet, daß** als von dem Anhängefahrzeug (2) an das Steuerungssystem (5, 6, 9, 11, 12, 17, 18, 19, 21, 22, 23, 28) übermittelbare Datensignale (M, D) wenigstens der Mittelwert (M) der Raddrehgeschwindigkeiten zweier Räder (30, 33) des Anhängefahrzeuges (2) sowie deren Differenzwert (D) verfügbar sind.

5. Verfahren nach wenigstens einem der vorhergehenden Ansprüche, **dadurch gekennzeichnet, daß** die von dem Anhängefahrzeug übermittelten Datensignale (M, D) in dem Steuerungssystem (5, 6, 9, 11, 12, 17, 18, 19, 21, 22, 23, 28) gemäß der Norm ISO 11992 ausgewertet werden.

6. Verfahren nach einem der vorhergehenden Ansprüche, **dadurch gekennzeichnet, daß** das Steuerungssystem (5, 6, 9, 11, 12, 17, 18, 19, 21, 22, 23, 28) durch Aussenden eines Test-Bremsanforderungssignals (50, 51) an das Anhängefahrzeug (2) eine Testbremsung auslösen kann, bei der die Bremsanlage des Anhängefahrzeuges (2) derart betätigbar ist, daß wenigstens ein kurveninneres Rad (33) des Anhängefahrzeuges (2) mit einer im Verhältnis zur höchstmöglichen Bremskraft geringen Bremskraft beaufschlagt wird.

7. Verfahren nach Anspruch 6, **dadurch gekennzeichnet, daß** das Steuerungssystem (5, 6, 9, 11, 12, 17, 18, 19, 21, 22, 23, 28) das Test-Bremsanforderungssignal aussendet, wenn es die Überschreitung eines vorbestimmten Wertes einer von dem Steuerungssystem (5, 6, 9, 11, 12, 17, 18, 19, 21, 22, 23, 28) ermittelten Querbeschleunigung feststellt.

FIG. 1

Fig.2a

Fig.2b

Fig.2c

Fig.2

**Europäisches Patentamt**

# EUROPÄISCHER RECHERCHENBERICHT

Nummer der Anmeldung

EP 04 00 0111

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 100 17 045 A (WABCO GMBH & CO OHG) 11. Oktober 2001 (2001-10-11) | 1,4,6,7 | B60T8/00 |
| Y | * Ansprüche 4,7,8 * | 2,3,5 | |
| Y | DE 101 33 409 A (LUCAS AUTOMOTIVE GMBH) 30. Januar 2003 (2003-01-30) * Spalte 2, Zeile 50 - Zeile 56 * | 2,3 | |
| Y | US 6 327 903 B1 (HECKER FALK ET AL) 11. Dezember 2001 (2001-12-11) * Spalte 5, Zeile 19 - Spalte 6, Zeile 24 * | 5 | |
| A | DE 100 46 036 A (KNORR BREMSE SYSTEME) 28. März 2002 (2002-03-28) * Ansprüche 1,3,11 * | 1,6,7 | |

**RECHERCHIERTE SACHGEBIETE (Int.Cl.7)**

B60T

Der vorliegende Recherchenbericht wurde für alle Patentansprüche erstellt

| Recherchenort | Abschlußdatum der Recherche | Prüfer |
|---|---|---|
| München | 18. Juni 2004 | Colonna, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

  .......................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.                EP 04 00 0111

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2004

| Im Recherchenbericht angeführtes Patentdokument | Datum der Veröffentlichung | Mitglied(er) der Patentfamilie | | Datum der Veröffentlichung |
|---|---|---|---|---|
| DE 10017045    A | 11-10-2001 | DE | 10017045 A1 | 11-10-2001 |
| | | EP | 1142768 A2 | 10-10-2001 |
| | | JP | 2001354128 A | 25-12-2001 |
| | | US | 2001037677 A1 | 08-11-2001 |
| DE 10133409    A | 30-01-2003 | DE | 10133409 A1 | 30-01-2003 |
| | | WO | 03006293 A1 | 23-01-2003 |
| | | EP | 1406799 A1 | 14-04-2004 |
| US 6327903    B1 | 11-12-2001 | DE | 19831286 A1 | 20-01-2000 |
| | | EP | 0973009 A2 | 19-01-2000 |
| | | JP | 2000038172 A | 08-02-2000 |
| DE 10046036    A | 28-03-2002 | DE | 10046036 A1 | 28-03-2002 |
| | | AU | 9556201 A | 26-03-2002 |
| | | BR | 0113956 A | 06-01-2004 |
| | | CN | 1458888 T | 26-11-2003 |
| | | WO | 0222416 A1 | 21-03-2002 |
| | | EP | 1322508 A1 | 02-07-2003 |
| | | JP | 2004509005 T | 25-03-2004 |

EPO FORM P0461

Für nähere Einzelheiten zu diesem Anhang : siehe Amtsblatt des Europäischen Patentamts, Nr.12/82